# FASCICULE DE BREVET EUROPEEN

(11) **EP 4 435 316 B1**
(45) Date de publication et mention de la délivrance du brevet: **30.04.2025**
(21) Numéro de dépôt: 24161321.5
(22) Date de dépôt: 05.03.2024
(51) Int. Cl.: F17C 13/12

(54) **MODULE POUR UN SYSTÈME D'ALIMENTATION EN DIHYDROGÈNE POUR UN MOTEUR D'AÉRONEF**
MODUL FÜR EIN DIWASSERSTOFF-VERSORGUNGSSYSTEM FÜR EINEN FLUGZEUGMOTOR
MODULE FOR A DIHYDROGEN SUPPLY SYSTEM FOR AN AIRCRAFT ENGINE

(30) Priorité: 23.03.2023 FR 2302721
(43) Date de publication de la demande: 25.09.2024
(73) Titulaire: AIRBUS OPERATIONS (S.A.S.), 31060 Toulouse (FR); AIRBUS (S.A.S.), 31700 Blagnac (FR)
(72) Inventeur: CZAPLA, Lionel, 31060 TOULOUSE (FR); MILLIERE, Jérôme, 31060 TOULOUSE (FR); PISSAVIN, Alexis, 31700 BLAGNAC (FR)
(74) Mandataire: Airbus-OPS SAS

(56) Documents cités:
- GB-A- 2 587 558
- US-A1- 2014 023 945
- US-A1- 2022 146 047
- US-A1- 2022 340 295

## Description

### DOMAINE TECHNIQUE

La présente invention concerne un module pour un système d'alimentation en dihydrogène pour un moteur d'aéronef, un système d'alimentation comprenant au moins deux tels modules, un aéronef comportant un tel module, ainsi qu'un aéronef comportant un tel système d'alimentation.

US2022146047A1 divulgue un tel module.

### ÉTAT DE LA TECHNIQUE ANTÉRIEURE

Afin de réduire les émissions de dioxyde de carbone (CO₂) des moteurs d'aéronef, il est connu d'utiliser le dihydrogène comme carburant. L'aéronef comporte alors un réservoir de dihydrogène, et au moins un moteur alimenté par ledit dihydrogène grâce à des canalisations qui courent dans l'aéronef, entre le réservoir et chaque moteur et sur lesquelles des pompes, des réchauffeurs et des vannes sont installés.

La sécurité doit être assurée si un incident intervient sur la ligne d'alimentation entre le réservoir et le moteur. Pour cela, il est connu de mettre en place différents systèmes de sécurité.

Bien qu'un tel arrangement soit performant lorsqu'un seul incident intervient sur la ligne d'alimentation, il est nécessaire de prévoir un arrangement qui assure la sécurité lorsqu'un deuxième incident intervient sur la même ligne d'approvisionnement.

### EXPOSE DE L'INVENTION

Un objet de la présente invention est de proposer un module pour un système d'alimentation en dihydrogène pour un moteur d'un aéronef, où ledit module permet d'assurer une sécurité renforcée en cas d'incident.

À cet effet, est proposé un module pour un système d'alimentation en dihydrogène pour un aéronef comportant un réservoir de dihydrogène et un moteur, ledit module comportant :
- un caisson extérieur présentant une entrée d'air et une sortie d'air,
- un caisson intérieur étanche, inerté et logé dans le caisson extérieur,
- une canalisation destinée à être fluidiquement connectée entre le réservoir et le moteur, et traversant le caisson extérieur et le caisson intérieur,
- un dispositif logé dans le caisson intérieur et arrangé pour agir sur le dihydrogène circulant dans la canalisation,
- un premier limiteur de pression monté sur la canalisation dans le caisson intérieur,
- un deuxième limiteur de pression monté sur le caisson intérieur,
- une canalisation d'échappement fluidiquement connectée entre le premier limiteur de pression, le deuxième limiteur de pression et l'extérieur de l'aéronef, en position montée du module dans l'aéronef,
- une vanne d'arrêt amont montée sur la canalisation au niveau de l'entrée de la canalisation dans le caisson extérieur,
- une vanne d'arrêt aval montée sur la canalisation au niveau de la sortie de la canalisation dans le caisson extérieur,
- des moyens de détection prévus pour détecter une fuite entre la canalisation et le caisson intérieur ou une fuite entre le caisson intérieur et le caisson extérieur et pour délivrer des informations représentatives d'une telle fuite, et
- une unité de contrôle arrangée pour commander en ouverture et en fermeture chaque vanne d'arrêt en fonction des informations délivrées par les moyens de détection.

Avec un tel arrangement, si deux incidents successifs apparaissent sur le module, la sécurité est garantie par évacuation du dihydrogène vers l'extérieur. En outre, le dihydrogène provenant d'une fuite est dilué avec l'air ambiant, ce qui limite les risques d'inflammation.

Avantageusement, la canalisation d'échappement débouche à l'extérieur de l'aéronef, en position montée du module dans l'aéronef, par l'intermédiaire d'un clapet anti-retour.

Avantageusement, la partie de la canalisation entre le caisson intérieur et chaque vanne d'arrêt prend la forme d'une canalisation à double peau.

Avantageusement, le module comporte un troisième limiteur de pression et un quatrième limiteur de pression, où le troisième limiteur de pression est monté entre la canalisation d'échappement et la canalisation en amont du caisson intérieur et où le quatrième limiteur de pression est monté entre la canalisation d'échappement et la canalisation en aval du caisson intérieur.

Avantageusement, le caisson extérieur est destiné à être orienté de manière à présenter l'entrée d'air vers l'avant de l'aéronef et la sortie d'air vers l'arrière de l'aéronef, en position montée du module dans l'aéronef.

Avantageusement, le module comporte une vanne de décharge montée sur la canalisation qui est dans le caisson intérieur et fluidiquement connectée à la canalisation d'échappement, où, sur commande de l'unité de contrôle, la vanne de décharge peut prendre alternativement une première position dans laquelle la vanne de décharge laisse le dihydrogène s'écouler dans la canalisation en empêchant l'écoulement du dihydrogène vers la canalisation d'échappement, et une deuxième position, dans laquelle la vanne de décharge laisse le dihydrogène s'écouler dans la canalisation et la canalisation d'échappement.

L'invention propose également un système d'alimentation en dihydrogène pour un aéronef comportant un réservoir de dihydrogène et un moteur, ledit système d'alimentation comportant au moins deux modules selon l'une des variantes précédentes, où la canalisation est commune à tous les modules, où le caisson extérieur est commun à tous les modules, où les caissons intérieurs sont montés en série sur la canalisation.

Avantageusement, les modules sont équipés des troisième et quatrième limiteurs de pression, et pour deux modules consécutifs le long de la canalisation, le quatrième limiteur de pression du deuxième module dans le sens d'écoulement du dihydrogène dans la canalisation est le troisième limiteur de pression du premier module.

L'invention propose également un aéronef comportant un réservoir de dihydrogène, un moteur et un module selon l'une des variantes précédentes, où la canalisation est fluidiquement connectée entre le réservoir et le moteur.

L'invention propose également un aéronef comportant un réservoir de dihydrogène, un moteur et un système d'alimentation selon l'une des variantes précédentes, où la canalisation est fluidiquement connectée entre le réservoir et le moteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef selon l'invention,
La figure 2 est une représentation schématique d'un module selon l'invention,
La figure 3 est une représentation schématique d'un système d'alimentation selon l'invention, et
La figure 4 illustre schématiquement un exemple d'une unité de contrôle mise en œuvre dans l'invention.

### EXPOSÉ DÉTAILLÉ DE MODES DE RÉALISATION

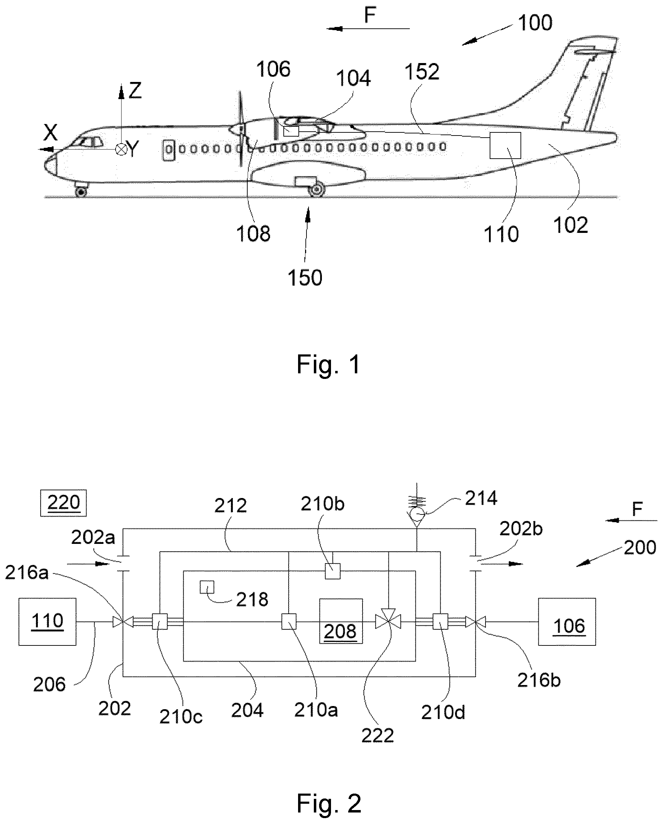

Dans la description qui suit, les termes relatifs à une position sont pris en référence à un aéronef en position normale de vol, c'est-à-dire comme il est représenté sur la figure 1.

Dans la description qui suit, et par convention, on appelle X la direction longitudinale de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

La figure 1 montre un aéronef 100 qui comporte un fuselage 102 de chaque côté duquel est fixée une aile 104 qui porte au moins un moteur 106 fonctionnant avec du dihydrogène comme carburant. Dans le mode de réalisation de l'invention présenté à la figure 1, le moteur 106 est un moteur à hélice, mais tout autre type de moteur est envisageable.

La flèche F indique la direction en marche avant de l'aéronef 100.

L'aéronef 100 comporte au moins un réservoir 110 dans lequel est stocké le dihydrogène, préférentiellement sous forme liquide. Dans le mode de réalisation de l'invention, le réservoir 110 est disposé à l'arrière du fuselage 102, mais un positionnement différent est possible.

L'aéronef 100 comporte également un système d'alimentation 150 qui assure la connexion fluidique entre un réservoir 110 et un moteur 106 logé dans une nacelle 108.

Le système d'alimentation 150 comporte entre autres une canalisation générale 152 qui est fluidiquement connectée entre le réservoir 110 et le moteur 106 à alimenter.

La figure 2 montre un module 200 qui comporte une portion de la canalisation générale 152, à savoir une canalisation référencée 206 qui est donc destinée à être fluidiquement connectée entre le réservoir 110 et le moteur 106. De façon particulière, cette canalisation 206 est du type à double peau.

Le module 200 comporte un caisson extérieur 202 présentant une paroi formant une enveloppe et présentant une première ouverture formant une entrée d'air 202a et une deuxième ouverture formant une sortie d'air 202b. Le caisson extérieur 202 est par exemple la nacelle 108 ou tout autre élément délimitant un volume restreint. Un courant d'air avec de l'air provenant de l'extérieur de l'aéronef 100 peut alors se créer entre l'entrée d'air 202a et la sortie d'air 202b.

Dans le mode de réalisation de l'invention présenté à la figure 2, le caisson extérieur 202 est orienté de manière à présenter l'entrée d'air 202a vers l'avant de l'aéronef 100 et la sortie d'air 202b vers l'arrière de l'aéronef 100 de manière à bénéficier de la pression dynamique créée pendant les phases de vol du fait du mouvement de l'aéronef 100 et ainsi assurer un bon écoulement de l'air dans le caisson extérieur 202.

Le module 200 comporte également un caisson intérieur 204 présentant une paroi qui est étanche et où le caisson intérieur 204 est logé dans le caisson extérieur 202. Le caisson intérieur 204 est inerté, soit par une mise au vide, soit par introduction d'un gaz inerte. De préférence, bien que non obligatoire, la pression du gaz inerte est supérieure à la pression du caisson extérieur 202, c'est-à-dire ici à la pression atmosphérique. Cela permet d'éviter que de l'air contenu dans le caisson extérieur 202 pénètre dans le caisson intérieur 204 en cas de fuite du caisson intérieur 204.

La canalisation 206 traverse le caisson extérieur 202 et le caisson intérieur 204. La canalisation 206 traverse ainsi successivement la paroi du caisson extérieur 202, puis la paroi du caisson intérieur 204, puis à nouveau la paroi du caisson intérieur 204 et la paroi du caisson extérieur 202.

Le module 200 comporte également un dispositif 208 logé dans le caisson intérieur 204. Le dispositif 208 est tout dispositif qui permet d'agir sur le dihydrogène circulant dans la canalisation 206 au niveau du caisson intérieur 204. Comme cela est expliqué ci-dessous, le dispositif peut être une pompe, un réchauffeur, ou autres.

Le module 200 comporte un premier limiteur de pression 210a monté sur la canalisation 206 dans le caisson intérieur 204 et un deuxième limiteur de pression 210b monté sur le caisson intérieur 204.

Associé aux premier et deuxième limiteurs de pression 210a-b, le module 200 comporte une canalisation d'échappement 212 fluidiquement connectée entre le premier limiteur de pression 210a, le deuxième limiteur de pression 210b et l'extérieur du caisson extérieur 202, et plus particulièrement l'extérieur de l'aéronef 100. Ainsi, si une surpression apparaît dans la canalisation 206 ou dans le caisson intérieur 204, les premier et deuxième limiteurs de pression 210a-b assurent l'échappement de la surpression vers l'extérieur du caisson extérieur 202, et plus particulièrement l'extérieur de l'aéronef 100. Les premiers et deuxièmes limiteurs de pression 210a-b peuvent présenter des pressions de décharge égales ou différentes.

Dans le mode de réalisation de l'invention présenté à la figure 2, le premier limiteur de pression 210a est disposé en amont du dispositif 208 par rapport au sens de l'écoulement du dihydrogène dans la canalisation 206, mais il peut être disposé en aval dudit dispositif 208.

Le module 200 comporte également une vanne d'arrêt amont 216a montée sur la canalisation 206 au niveau de l'entrée de la canalisation 206 dans le caisson extérieur 202 et une vanne d'arrêt aval 216b montée sur la canalisation 206 au niveau de la sortie de la canalisation 206 dans le caisson extérieur 202.

La vanne d'arrêt amont 216a est ainsi installée au niveau où la canalisation 206 traverse la paroi du caisson extérieur 202 pour rentrer dans ledit caisson extérieur 202 et la vanne d'arrêt aval 216b est ainsi installée au niveau où la canalisation 206 traverse la paroi du caisson extérieur 202 pour sortir dudit caisson extérieur 202. La vanne d'arrêt amont 216a et la vanne d'arrêt aval 216b sont préférentiellement des vannes pilotées électriquement, pneumatiquement, ou autre.

Le module 200 comporte des moyens de détection 218 qui sont prévus pour détecter une fuite de dihydrogène entre la canalisation 206 et le caisson intérieur 204 ou une fuite entre le caisson intérieur 204 et le caisson extérieur 202.

Le module 200 comporte une unité de contrôle 220 qui est en communication avec les moyens de détection 218 qui sont par ailleurs prévus pour délivrer des informations représentatives d'une fuite et ainsi en informer l'unité de contrôle 220.

L'unité de contrôle 220 est, par ailleurs, arrangée pour commander en ouverture et en fermeture chaque vanne d'arrêt 216a-b en fonction des informations délivrées par les moyens de détection 218s et selon les besoins comme cela est expliqué ci-dessous.

Avec un tel arrangement, même si deux incidents surviennent sur le module 200, la mise en sécurité dudit module 200 et l'évacuation du dihydrogène vers l'extérieur sont assurées comme cela est expliqué ci-dessous.

Les moyens de détection 218 peuvent prendre différentes formes et peuvent être constitués d'un ou plusieurs capteurs de pression disposés dans le caisson intérieur 204. Ainsi, si un capteur de pression détecte une variation de pression dans le caisson intérieur 204 qui est sous vide ou sous une pression connue d'un gaz inerte, cela signifie qu'il y a une fuite. Les moyens de détection 218 peuvent être complétés par des capteurs de détection adaptés à la détection du dihydrogène et du dioxygène et l'analyse des données transmises par ces capteurs de détection permet de savoir si c'est la canalisation 206 qui fuit ou le caisson intérieur 204.

Le fonctionnement va maintenant être décrit.

Selon un premier mode de fonctionnement, si la canalisation 206 fuit à l'intérieur du caisson intérieur 204, le dihydrogène se répand dans le caisson intérieur 204 qui monte en pression jusqu'à ce que la pression de décharge (par exemple 3 bars) du deuxième limiteur de pression 210b soit atteinte et le deuxième limiteur de pression 210b s'ouvre sur la canalisation d'échappement 212 pour évacuer le dihydrogène vers l'extérieur. Du fait des variations de pression dans le caisson intérieur 204, les moyens de détection 218 détectent alors la présence de la fuite et informent l'unité de contrôle 220 qui commande la fermeture des deux vannes d'arrêt 216a-b. La fuite n'est plus alimentée et le caisson intérieur 204 reste rempli de dihydrogène à la pression de décharge du deuxième limiteur de pression 210b.

Si, à la suite de la fuite précédente, une deuxième fuite intervient au niveau du caisson intérieur 204, c'est-à-dire que le dihydrogène se répand dans le caisson extérieur 202 qui est ventilé du fait du courant d'air entre l'entrée d'air 202a et la sortie d'air 202b. Le dihydrogène est ainsi évacué vers l'extérieur du caisson extérieur 202, et plus particulièrement l'extérieur de l'aéronef 100.

Selon un deuxième mode de fonctionnement, lorsque le caisson intérieur 204 est inerté par une mise au vide ou lorsque la pression du gaz inerte dans le caisson intérieur 204 est inférieure à la pression du caisson extérieur 202, si une fuite intervient au niveau du caisson intérieur 204, l'air présent dans le caisson extérieur 202 se répand dans le caisson intérieur 204 qui monte en pression. Du fait des variations de pression dans le caisson intérieur 204, les moyens de détection 218 détectent alors la présence de la fuite et informent l'unité de contrôle 220 qui commande la fermeture des deux vannes d'arrêt 216a-b. La canalisation 206 est condamnée et elle reste remplie de dihydrogène à la pression de décharge du premier limiteur de pression 210a. Du fait du remplissage du caisson intérieur 204 par l'air, le caisson intérieur 204 perd ses caractéristiques d'isolant thermique pour la canalisation 206 présente dans ledit caisson intérieur 204. Le dihydrogène présent dans la canalisation 206 se réchauffe alors également, et la pression dans la canalisation 206 augmente jusqu'à ce que la pression de décharge (par exemple 60 bars) du premier limiteur de pression 210a soit atteinte et le premier limiteur de pression 210a s'ouvre sur la canalisation d'échappement 212 pour évacuer le dihydrogène vers l'extérieur du caisson extérieur 202, et plus particulièrement l'extérieur de l'aéronef 100.

Si, à la suite de la fuite précédente, une deuxième fuite apparaît au niveau de la canalisation 206 qui fuit à l'intérieur du caisson intérieur 204, le dihydrogène de la canalisation 206 se répand dans le caisson intérieur 204 puis dans la canalisation d'échappement 212 à travers le premier limiteur de pression 210a ou dans le caisson extérieur 202 à travers la fuite au niveau du caisson intérieur 204. Le caisson extérieur 202 est ventilé du fait du courant d'air entre l'entrée d'air 202a et la sortie d'air 202b et le dihydrogène est ainsi évacué vers l'extérieur du caisson extérieur 202, et plus particulièrement vers l'extérieur de l'aéronef 100.

Ainsi, avec un tel arrangement, même si deux incidents arrivent, la sécurité est assurée car les risques liés à la création d'un mélange explosif sont limités.

Dans le mode de réalisation de l'invention présenté à la figure 2, la canalisation d'échappement 212 débouche à l'extérieur par l'intermédiaire d'un clapet anti-retour 214 pour éviter l'entrée de l'air extérieur dans le caisson intérieur 204.

Dans le mode de réalisation de l'invention présenté à la figure 2, la partie de la canalisation 206 qui est entre le caisson intérieur 204 et chaque vanne d'arrêt 216a-b, prend la forme d'une canalisation à double peau.

La partie de la canalisation 206 qui est dans le caisson intérieur 204 prend ici la forme d'une canalisation à simple peau.

Dans le mode de réalisation de l'invention présenté à la figure 2, le module 200 comporte un troisième limiteur de pression 210c et un quatrième limiteur de pression 210d.

Le troisième limiteur de pression 210c est monté entre la canalisation d'échappement 212 et la canalisation 206 en amont du caisson intérieur 204 afin d'assurer un déchargement de la canalisation 206 vers la canalisation d'échappement 212 puis l'extérieur du caisson extérieur 202, et plus particulièrement l'extérieur de l'aéronef 100 si la pression dans la canalisation 206 dépasse la pression de décharge du troisième limiteur de pression 210c.

De la même manière, le quatrième limiteur de pression 210d est monté entre la canalisation d'échappement 212 et la canalisation 206 en aval du caisson intérieur 204 afin d'assurer un déchargement de la canalisation 206 vers la canalisation d'échappement 212 puis l'extérieur du caisson extérieur 202, et plus particulièrement l'extérieur de l'aéronef 100 si la pression dans la canalisation 206 dépasse la pression de décharge du quatrième limiteur de pression 210d.

Selon un mode de réalisation particulier de l'invention, le module 200 comporte une vanne de décharge 222 qui est commandée par l'unité de contrôle 220. La vanne de décharge 222 est montée sur la canalisation 206 qui est dans le caisson intérieur 204 et est fluidiquement connectée à la canalisation d'échappement 212. La vanne de décharge 222 est préférentiellement une vanne pilotée électriquement, pneumatiquement, ou autre.

Sur commande de l'unité de contrôle 220, la vanne de décharge 222 peut prendre alternativement une première position dans laquelle la vanne de décharge 222 laisse le dihydrogène s'écouler dans la canalisation 206 en empêchant l'écoulement du dihydrogène vers la canalisation d'échappement 212, et une deuxième position, dans laquelle la vanne de décharge 222 laisse le dihydrogène s'écouler dans la canalisation 206 et la canalisation d'échappement 212 pour rejoindre l'extérieur du caisson extérieur 202, et plus particulièrement l'extérieur de l'aéronef 100.

Ainsi, lorsqu'aucune fuite n'est détectée, l'unité de contrôle 220 commande la vanne de décharge 222 pour qu'elle prenne la première position, et lorsqu'une fuite est détectée et que les vannes d'arrêt 216a-b sont fermées, l'unité de contrôle commande le passage de la vanne de décharge 222 de la première position à la deuxième position pour que le dihydrogène présent dans la canalisation 206 s'évacue vers l'extérieur avant l'éventuelle apparition d'une deuxième fuite.

Dans le mode de réalisation de l'invention présenté à la figure 2, la vanne de décharge 222 est en aval du dispositif 208, mais elle peut être en amont dudit dispositif 208.

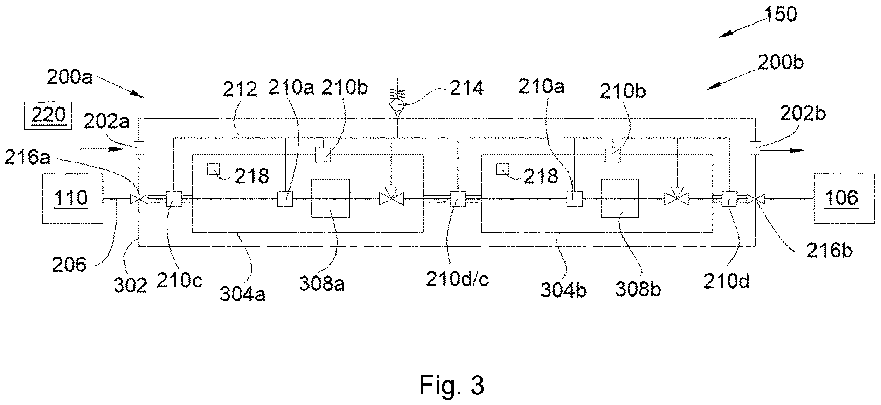

La figure 3 montre un exemple d'un système d'alimentation 150 selon l'invention dans lequel deux modules 200a-b selon l'invention ont été mis en place. D'une manière générale, un système d'alimentation 150 peut comporter au moins deux modules 200a-b.

La canalisation 206 est commune à tous les modules 200a-b.

La canalisation d'échappement 212 est ici commune à tous les modules 200a-b et lorsqu'il est présent, le clapet anti-retour 214 est commun à tous les modules 200a-b, mais l'un comme l'autre peuvent être séparés.

Le caisson extérieur 302 est commun à tous les modules 200a-b.

L'unité de contrôle 220 est également ici commune à tous les modules 200a-b, mais chaque module 200a-b peut avoir sa propre unité de contrôle 220 qui communique avec les autres unités de contrôle 220.

Ainsi dans un même caisson extérieur 302, les caissons intérieurs 304a-b sont montés en série sur la canalisation 206

Lorsque les modules 200a-b sont équipés des troisième et quatrième limiteurs de pression 210c-d, pour deux modules 200a-b consécutifs le long de la canalisation 206, le quatrième limiteur de pression 210d du deuxième module 200b dans le sens d'écoulement du dihydrogène dans la canalisation 206 est le troisième limiteur de pression 210c du premier module 200a.

Dans le mode de réalisation de l'invention présenté à la figure 3, la partie de la canalisation 206 qui est entre les caissons intérieurs 304a-b prend la forme d'une canalisation à double peau.

Selon un mode de réalisation particulier de l'invention, le dispositif 308a qui est dans le caisson 304a qui est juste en aval du réservoir 110 prend la forme d'une pompe, et le dispositif 308b qui est dans le caisson 304b qui est juste en amont du moteur 106 prend la forme d'un réchauffeur qui assure le passage du dihydrogène de la phase liquide à la phase gazeuse.

Un tel réchauffeur 308b est par exemple un échangeur thermique qui assure un échange de calories entre un fluide caloporteur chaud et le dihydrogène froid, ou un système avec une résistance chauffante.

Dans un mode de réalisation avantageux, le module 200 comporte en outre un ventilateur prévu pour améliorer la circulation de l'air entre l'entrée d'air 202a et la sortie d'air 202b. Ce ventilateur est contrôlé par l'unité de contrôle 220. Par exemple, l'unité de contrôle 220 commande le fonctionnement du ventilateur pendant des phases d'utilisation de l'aéronef au cours desquelles la circulation de l'air entre l'entrée d'air 202a et la sortie d'air 202b serait moindre en l'absence de fonctionnement du ventilateur, en particulier lorsque l'aéronef est stationné au sol.

Dans un autre mode de réalisation avantageux, le caisson extérieur 202 comporte en outre une porte dite de surpression. Cette porte de surpression est fermée de façon étanche lors du fonctionnement normal de l'aéronef 100. Elle est prévue pour s'ouvrir vers l'extérieur du caisson extérieur 202 lorsque la pression à l'intérieur du caisson extérieur 202 est supérieure à une valeur de pression prédéterminée. Ainsi, dans l'hypothèse où la circulation de l'air entre l'entrée d'air 202a et la sortie d'air 202b ne permettrait pas une ventilation à l'intérieur du caisson extérieur 202 suffisante pour éviter d'avoir un mélange explosif à l'intérieur du caisson extérieur 202 suite à une fuite, la porte de surpression permet de protéger le caisson extérieur 202 en s'ouvrant si une explosion survient à l'intérieur du caisson extérieur 202. Dans un mode particulier de réalisation, le caisson intérieur 204 comporte également une porte de surpression. Ainsi, dans l'hypothèse où le débit à travers le premier limiteur de pression 210 ne permettrait pas une évacuation suffisante du gaz contenu dans le caisson intérieur 204 suite à une fuite, la porte de surpression du caisson intérieur 204 permet de protéger le caisson intérieur 204 en s'ouvrant si une explosion survient à l'intérieur du caisson intérieur 204.

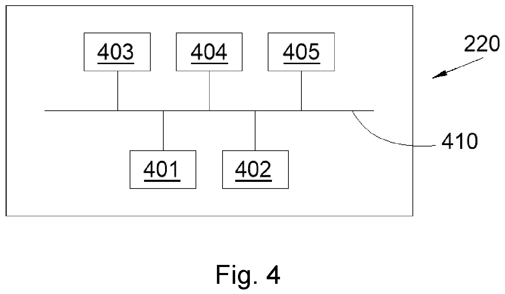

La figure 4 illustre schématiquement un exemple d'une unité de contrôle 220 mise en œuvre dans l'invention.

L'unité de contrôle 220 comporte, reliés par un bus de communication 410 : un processeur ou CPU (« Central Processing Unit » en anglais) 401 ; une mémoire vive RAM (« Read-Only Memory » en anglais) 402 ; une mémoire morte 403, par exemple de type ROM (« Read Only Memory » en anglais) ou EEPROM (« Electrically-Erasable Programmable ROM » en anglais), telle qu'une mémoire Flash ; une unité de stockage, telle qu'un disque dur HDD (« Hard Disk Drive » en anglais) 404, ou un lecteur de support de stockage, tel qu'un lecteur de cartes SD (« Secure Digital » en anglais) ; et un gestionnaire d'interfaces I/f 405.

Le gestionnaire d'interfaces I/f 405 permet à l'unité de contrôle 220 d'interagir avec les autres composants comme les moyens de détection 218, les vannes d'arrêt 216a-b, la vanne de décharge 222, etc.

Le processeur 401 est capable d'exécuter des instructions chargées dans la mémoire vive 402 à partir de la mémoire morte 403, d'une mémoire externe, d'un support de stockage (tel qu'une carte SD), ou d'un réseau de communication. Lorsque l'unité de contrôle 220 est mise sous tension, le processeur 401 est capable de lire de la mémoire vive 402 des instructions et de les exécuter. Ces instructions forment un programme d'ordinateur causant l'implémentation, par le processeur 401, de tout ou partie des étapes, procédés et fonctionnements décrits ici.

Tout ou partie des étapes, procédés et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple, un composant FPGA (« Field Programmable Gate Array » en anglais) ou ASIC (« Application Specific Integrated Circuit » en anglais). D'une manière générale, l'unité de contrôle 220 comporte de la circuiterie électronique adaptée et configurée pour implémenter les fonctionnements, procédés et étapes décrits ici.

## Revendications

1. Module (200) pour un système d'alimentation (150) en dihydrogène pour un aéronef (100) comportant un réservoir (110) de dihydrogène et un moteur (106), ledit module (200) comportant :
- un caisson extérieur (202) présentant une entrée d'air (202a) et une sortie d'air (202b),
- un caisson intérieur (204) étanche, inerté et logé dans le caisson extérieur (202),
- une canalisation (206) destinée à être fluidiquement connectée entre le réservoir (110) et le moteur (106), et traversant le caisson extérieur (202) et le caisson intérieur (204),
- un dispositif (208) logé dans le caisson intérieur (204) et arrangé pour agir sur le dihydrogène circulant dans la canalisation (206),
- un premier limiteur de pression (210a) monté sur la canalisation (206) dans le caisson intérieur (204),
- un deuxième limiteur de pression (210b) monté sur le caisson intérieur (204),
- une canalisation d'échappement (212) fluidiquement connectée entre le premier limiteur de pression (210a), le deuxième limiteur de pression (210b) et l'extérieur de l'aéronef (100), en position montée du module (200) dans l'aéronef,
- une vanne d'arrêt amont (216a) montée sur la canalisation (206) au niveau de l'entrée de la canalisation (206) dans le caisson extérieur (202),
- une vanne d'arrêt aval (216b) montée sur la canalisation (206) au niveau de la sortie de la canalisation (206) dans le caisson extérieur (202),
- des moyens de détection (218) prévus pour détecter une fuite entre la canalisation (206) et le caisson intérieur (204) ou une fuite entre le caisson intérieur (204) et le caisson extérieur (202) et pour délivrer des informations représentatives d'une telle fuite, et
- une unité de contrôle (220) arrangée pour commander en ouverture et en fermeture chaque vanne d'arrêt (216a-b) en fonction des informations délivrées par les moyens de détection (218).

2. Module (200) selon la revendication 1, **caractérisé en ce que** la canalisation d'échappement (212) débouche à l'extérieur de l'aéronef (100), en position montée du module (200) dans l'aéronef, par l'intermédiaire d'un clapet anti-retour (214).

3. Module (200) selon l'une des revendications 1 ou 2, **caractérisé en ce que** la partie de la canalisation (206) entre le caisson intérieur (204) et chaque vanne d'arrêt (216a-b) prend la forme d'une canalisation à double peau.

4. Module (200) selon l'une des revendications 1 à 3, **caractérisé en ce qu'**il comporte un troisième limiteur de pression (210c) et un quatrième limiteur de pression (210d), où le troisième limiteur de pression (210c) est monté entre la canalisation d'échappement (212) et la canalisation (206) en amont du caisson intérieur (204) et où le quatrième limiteur de pression (210d) est monté entre la canalisation d'échappement (212) et la canalisation (206) en aval du caisson intérieur (204).

5. Module (200) selon l'une des revendications 1 à 4, **caractérisé en ce que** le caisson extérieur (202) est destiné à être orienté de manière à présenter l'entrée d'air (202a) vers l'avant de l'aéronef (100) et la sortie d'air (202b) vers l'arrière de l'aéronef (100), en position montée du module (200) dans l'aéronef.

6. Module (200) selon l'une des revendications 1 à 5, **caractérisé en ce qu'**il comporte une vanne de décharge (222) montée sur la canalisation (206) qui est dans le caisson intérieur (204) et fluidiquement connectée à la canalisation d'échappement (212), où, sur commande de l'unité de contrôle (220), la vanne de décharge (222) peut prendre alternativement une première position dans laquelle la vanne de décharge (222) laisse le dihydrogène s'écouler dans la canalisation (206) en empêchant l'écoulement du dihydrogène vers la canalisation d'échappement (212), et une deuxième position, dans laquelle la vanne de décharge (222) laisse le dihydrogène s'écouler dans la canalisation (206) et la canalisation d'échappement (212).

7. Système d'alimentation (150) en dihydrogène pour un aéronef (100) comportant un réservoir (110) de dihydrogène et un moteur (106), ledit système d'alimentation (150) comportant au moins deux modules (200a-b) selon l'une des revendications précédentes, où la canalisation (206) est commune à tous les modules (200a-b), où le caisson extérieur (302) est commun à tous les modules (200a-b), où les caissons intérieurs (304a-b) sont montés en série sur la canalisation (206).

8. Système d'alimentation (150) selon la revendication 7, **caractérisé en ce que** les modules (200a-b) sont équipés des troisième et quatrième limiteurs de pression (210c-d), et **en ce que** pour deux modules (200a-b) consécutifs le long de la canalisation (206), le quatrième limiteur de pression (210d) du deuxième module (200b) dans le sens d'écoulement du dihydrogène dans la canalisation (206) est le troisième limiteur de pression (210c) du premier module (200a).

9. Aéronef (100) comportant un réservoir (110) de dihydrogène, un moteur (106) et un module (200) selon l'une des revendications 1 à 6, où la canalisation (206) est fluidiquement connectée entre le réservoir (110) et le moteur (106).

10. Aéronef (100) comportant un réservoir (110) de dihydrogène, un moteur (106) et un système d'alimentation (150) selon l'une des revendications 7 ou 8, où la canalisation (206) est fluidiquement connectée entre le réservoir (110) et le moteur (106).

## Patentansprüche

1. Modul (200) für ein Diwasserstoff-Versorgungssystem (150) für ein Luftfahrzeug (100) mit einem Diwasserstoff-Vorratsbehälter (110) und einem Motor (106) wobei das Modul (200) Folgendes beinhaltet:
- einen Außenkasten (202) mit einem Lufteinlass (202a) und einem Luftauslass (202b),
- einen Innenkasten (204), der dicht, inertisiert und im Außenkasten (202) untergebracht ist,
- eine Leitung (206), die dazu bestimmt ist, fluidisch zwischen den Vorratsbehälter (110) und den Motor (106) geschaltet zu sein und den Außenkasten (202) und den Innenkasten (204) durchquert,
- eine Vorrichtung (208), die im Innenkasten (204) untergebracht ist und dafür angeordnet ist, auf den Diwasserstoff zu wirken, der in der Leitung (206) zirkuliert,
- einen ersten Druckbegrenzer (210a), der an der Leitung (206) im Innenkasten (204) angebracht ist,
- einen zweiten Druckbegrenzer (210b), der am Innenkasten (204) angebracht ist,
- eine Ablassleitung (212), die in Montageposition des Moduls (200) im Luftfahrzeug fluidisch zwischen den ersten Druckbegrenzer (210a), den zweiten Druckbegrenzer (210b) und das Äußere des Luftfahrzeugs (100) geschaltet ist,
- ein stromaufwärtiges Absperrventil (216a), das an der Leitung (206) im Bereich des Eintritts der Leitung (206) im Außenkasten (202) angebracht ist,
- ein stromabwärtiges Absperrventil (216b), das an der Leitung (206) im Bereich des Austritts der Leitung (206) im Außenkasten (202) angebracht ist,
- Detektionsmittel (218), die dafür vorgesehen sind, ein Leck zwischen der Leitung (206) und dem Innenkasten (204) oder ein Leck zwischen dem Innenkasten (204) und dem Außenkasten (202) zu detektieren und Informationen zu liefern, die für ein solches Leck repräsentativ sind, und
- eine Steuereinheit (220), die dafür angeordnet ist, jedes Absperrventil (216a-b) in Abhängigkeit von den Informationen, die von den Detektionsmitteln (218) geliefert werden, beim Öffnen und Schließen zu steuern.

2. Modul (200) nach Anspruch 1, **dadurch gekennzeichnet, dass** die Ablassleitung (212) in Montageposition des Moduls (200) im Luftfahrzeug mittels einer Rückschlagklappe (214) außerhalb des Luftfahrzeugs (100) mündet.

3. Modul (200) nach einem der Ansprüche 1 oder 2, **dadurch gekennzeichnet, dass** der Abschnitt der Leitung (206) zwischen dem Innenkasten (204) und jedem Absperrventil (216a-b) die Form einer doppelwandigen Leitung annimmt.

4. Modul (200) nach einem der Ansprüche 1 bis 3, **dadurch gekennzeichnet, dass** es einen dritten Druckbegrenzer (210c) und einen vierten Druckbegrenzer (210d) beinhaltet, wobei der dritte Druckbegrenzer (210c) zwischen der Ablassleitung (212) und der Leitung (206) stromauf des Innenkastens (204) angebracht ist und wobei der vierte Druckbegrenzer (210d) zwischen der Ablassleitung (212) und der Leitung (206) stromab des Innenkastens (204) angebracht ist.

5. Modul (200) nach einem der Ansprüche 1 bis 4, **dadurch gekennzeichnet, dass** der Außenkasten (202) dazu bestimmt ist, so orientiert zu sein, dass in Montageposition des Moduls (200) im Luftfahrzeug der Lufteinlass (202a) zum vorderen Teil des Luftfahrzeugs (100) und der Luftauslass (202b) zum hinteren Teil des Luftfahrzeugs (100) zeigt.

6. Modul (200) nach einem der Ansprüche 1 bis 5, **dadurch gekennzeichnet, dass** es ein Entlastungsventil (222) beinhaltet, das an der Leitung (206) angebracht ist, das sich im Innenkasten (204) befindet und fluidisch mit der Ablassleitung (212) verbunden ist, wobei das Entlastungsventil (222) auf Befehl der Steuereinheit (220) abwechselnd eine erste Position, in der das Entlastungsventil (222) den Diwasserstoff in der Leitung (206) strömen lässt, wobei das Strömen des Diwasserstoffs zur Ablassleitung (212) verhindert wird, und eine zweite Position, in der das Entlastungsventil (222) den Diwasserstoff in der Leitung (206) und der Ablassleitung (212) strömen lässt, einnehmen kann.

7. Diwasserstoff-Versorgungssystem (150) für ein Luftfahrzeug (100) mit einem Diwasserstoff-Vorratsbehälter (110) und einem Motor (106), wobei das Versorgungssystem (150) wenigstens zwei Module (200a-b) nach einem der vorhergehenden Ansprüche beinhaltet, wobei die Leitung (206) für alle Module (200a-b) gemeinsam ist, wobei der Außenkasten (302) für alle Modulen (200a-b) gemeinsam ist, wobei die Innenkästen (304a-b) in Reihe an der Leitung (206) angebracht sind.

8. Versorgungssystem (150) nach Anspruch 7, **dadurch gekennzeichnet, dass** die Module (200a-b) mit dem dritten und vierten Druckbegrenzer (210c-d) versehen sind, und dadurch, dass für zwei entlang der Leitung (206) aufeinanderfolgende Module (200a-b) der vierte Druckbegrenzer (210d) des zweiten Moduls (200b) in Strömungsrichtung des Diwasserstoffs in der Leitung (206) der dritte Druckbegrenzer (210c) des ersten Moduls (200a) ist.

9. Luftfahrzeug (100) mit einem Diwasserstoff-Vorratsbehälter (110), einem Motor (106) und einem Modul (200) nach einem der Ansprüche 1 bis 6, wobei die Leitung (206) fluidisch zwischen den Vorratsbehälter (110) und den Motor (106) geschaltet ist.

10. Luftfahrzeug (100) mit einem Diwasserstoff-Vorratsbehälter (110), einem Motor (106) und ein Versorgungssystem (150) nach einem der Ansprüche 7 oder 8, wobei die Leitung (206) fluidisch zwischen den Vorratsbehälter (110) und den Motor (106) geschaltet ist.

## Claims

1. Module (200) for a dihydrogen supply system (150) for an aircraft (100) comprising a dihydrogen tank (110) and an engine (106), said module (200) comprising:
- an outer box (202) having an air inlet (202a) and an air outlet (202b),
- a leak-tight inner box (204), inert and housed in the outer box (202),
- a pipeline (206) intended to be fluidically connected between the tank (110) and the engine (106), and passing through the outer box (202) and the inner box (204),
- a device (208) housed in the inner box (204) and arranged to act on the dihydrogen circulating in the pipeline (206),
- a first pressure limiter (210a) mounted on the pipeline (206) in the inner box (204),
- a second pressure limiter (210b) mounted on the inner box (204),
- an exhaust pipeline (212) fluidically connected between the first pressure limiter (210a), the second pressure limiter (210b) and the outside of the aircraft (100), in the mounted position of the module (200) in the aircraft,
- an upstream shut-off valve (216a) mounted on the pipeline (206) at the inlet of the pipeline (206) in the outer box (202),
- a downstream shut-off valve (216b) mounted on the pipeline (206) at the outlet of the pipeline (206) in the outer box (202),
- detection means (218) provided to detect a leak between the pipeline (206) and the inner box (204) or a leak between the inner box (204) and the outer box (202) and to deliver information representative of such a leak, and
- a control unit (220) arranged to control the opening and closing of each shut-off valve (216a-b) as a function of the information delivered by the detection means (218).

2. Module (200) according to Claim 1, **characterized in that** the exhaust pipeline (212) emerges at the outside of the aircraft (100), in the mounted position of the module (200) in the aircraft, via a check valve (214).

3. Module (200) according to one of Claims 1 and 2, **characterized in that** the part of the pipeline (206) between the inner box (204) and each shut-off valve (216a-b) takes the form of a double-skin pipeline.

4. Module (200) according to one of Claims 1 to 3, **characterized in that** it comprises a third pressure limiter (210c) and a fourth pressure limiter (210d), in which the third pressure limiter (210c) is mounted between the exhaust pipeline (212) and the pipeline (206) upstream of the inner box (204) and in which the fourth pressure limiter (210d) is mounted between the exhaust pipeline (212) and the pipeline (206) downstream of the inner box (204).

5. Module (200) according to one of Claims 1 to 4, **characterized in that** the outer box (202) is intended to be oriented so as to have the air inlet (202a) toward the front of the aircraft (100) and the air outlet (202b) toward the rear of the aircraft (100), in the mounted position of the module (200) in the aircraft.

6. Module (200) according to one of Claims 1 to 5, **characterized in that** it comprises a discharge valve (222) mounted on the pipeline (206) which is in the inner box (204) and fluidically connected to the exhaust pipeline (212), in which, on command from the control unit (220), the discharge valve (222) can alternately take a first position in which the discharge valve (222) lets the dihydrogen flow in the pipeline (206) by preventing the flow of the dihydrogen to the exhaust pipeline (212), and a second position, in which the discharge valve (222) lets the dihydrogen flow in the pipeline (206) and the exhaust pipeline (212).

7. Dihydrogen supply system (150) for an aircraft (100) comprising a dihydrogen tank (110) and an engine (106), said supply system (150) comprising at least two modules (200a-b) according to one of the preceding claims, in which the pipeline (206) is common to all the modules (200a-b), in which the outer box (302) is common to all the modules (200a-b), and in which the inner boxes (304a-b) are mounted in series on the pipeline (206).

8. Supply system (150) according to Claim 7, **characterized in that** the modules (200a-b) are equipped with third and fourth pressure limiters (210c-d), and **in that**, for two consecutive modules (200a-b) along the pipeline (206), the fourth pressure limiter (210d) of the second module (200b) in the direction of flow of the dihydrogen in the pipeline (206) is the third pressure limiter (210c) of the first module (200a).

9. Aircraft (100) comprising a dihydrogen tank (110), an engine (106) and a module (200) according to one of Claims 1 to 6, in which the pipeline (206) is fluidically connected between the tank (110) and the engine (106).

10. Aircraft (100) comprising a dihydrogen tank (110), an engine (106) and a supply system (150) according to one of Claims 7 and 8, in which the pipeline (206) is fluidically connected between the tank (110) and the engine (106).
